# EUROPÄISCHE PATENTSCHRIFT

(11) **EP 0 933 556 B1**
(45) Veröffentlichungstag und Bekanntmachung des Hinweises auf die Patenterteilung: **19.03.2003**
(21) Anmeldenummer: 98122204.5
(22) Anmeldetag: 23.11.1998
(51) Int. Cl.: F16G 11/02, B60R 22/22

(54) **Seilbefestigung**
Fastening of cables
Fixation de câbles

(30) Priorität: 22.11.1997 DE 19751922
(43) Veröffentlichungstag der Anmeldung: 04.08.1999
(73) Patentinhaber: GRIWE Innovative Umformtechnik GmbH, D-56457 Westerburg (DE)
(72) Erfinder: Burkhardt, Klaus, 51519 Odenthal (DE)
(74) Vertreter: Jochem, Bernd, Dipl.-Wirtsch.-Ing.

(56) Entgegenhaltungen:
- EP-A- 0 478 886
- FR-A- 1 038 216
- US-A- 2 461 030
- US-A- 3 797 947

## Beschreibung

Seilbefestigung mit einer Drahtseilschlaufe, deren beide Stränge in paralleler Lage unmittelbar nebeneinander mit einer Blechhülse verpreßt sind, die mit Einprägungen versehen ist.

Derartige Seilbefestigungen werden als Zugglieder beispielsweise bei Gurtstraffeinrichtungen in Kraftfahrzeugen verwendet. Sie müssen in der Lage sein, den bei Unfällen auftretenden sehr hohen Kräften zu widerstehen, wobei es zur Erfüllung der strengen Sicherheitsvorschriften der Automobilhersteller notwendig ist, derartige Seilbefestigungen auch in großer Serie unter Einhaltung der vorgegebenen Festigkeitswerte herzustellen.

Aus der EP-0 478 886 ist ein Zugglied bekannt, bei welchem in einer aus einem flachen Blech gebogenen Hülse Einkerbungen quer zur Zugrichtung vorgesehen werden, um trotz der einfachen Herstellung einen hohen Ausziehwiderstand zu erreichen.

Es hat sich jedoch gezeigt, daß sich mit quer zur Zugrichtung liegenden Einkerbungen zwar den Anforderungen ensprechende Ausziehwiderstände erreichen lassen, diese jedoch bei der Herstellung in großen Stückzahlen erheblichen Schwankungen unterliegen. Um sicherzugehen, daß auch Seilbefestigungen mit nach unten streuenden Festigkeitswerten noch die Vorgaben erfüllen, muß man die Seilbefestigung grundsätzlich größer dimensionieren. Dadurch erhöhen sich die Fertigungskosten bei den in Großserie hergestellten Seilbefestigungen.

Die Aufgabe der Erfindung besteht darin, eine Seilbefestigung zu schaffen, deren Ausziehwiderstand größer als bei vorbekannten Seilbefestigungen ist und in der Serienfertigung geringer schwankt, so daß sie für den jeweiligen Anwendungsfall optimal ausgelegt werden können.

Erfindungsgemäß wird die Aufgabe dadurch gelöst, daß auf beiden Seiten der Blechhülse im mittleren Bereich zwischen den Drahtstegen Einprägungen vorgesehen sind, deren Breiten höchstens gleich dem Abstand der Mittellinien der Drahtstränge sind, und auf der Innenseite der Hülse wenigstens im Bereich zwischen den Drahtsträngen eine formschlüssige Verbindung zwischen den spiralförmigen Freiräumen zwischen den Litzen und dem Blechmaterial der Hülse besteht, das infolge eines während des Verpressens mit den Drahtsträngen für eine bestimmte Zeitspanne aufgebrachten hohen Drucks in die Freiräume fließt.

Die erfindungsgemäße Seilbefestigung bietet den Vorteil, daß durch das während des Verpressens beim Herstellen der Einprägungen bis über die Fließgrenze hinaus belastete Material in den keilförmigen Hohlraum zwischen der Hülse und den beiden Drahtsträngen fließt und dabei für einen Formschluß zwischen den Drahtlitzen und der Hülse sorgt. Die erfindungsgemäße Seilbefestigung stellt sich daher als Kombination einer form- und kraftschlüssigen Verbindung zwischen der Hülse und den Drahtsträngen dar, da übliches Blechmaterial auch über elastische Eigenschaften verfügt, die für eine zusätzliche Erhöhung des Ausziehwiderstandes sorgen. Zu erwähnen ist, daß infolge des fließenden Blechmaterials der Formschluß selbst bei eher punktuell angelegten Einprägungen in einem relativ weiten Bereich erfolgt und durch den großflächigen Formschluß besonders hohe Ausziehwiderstände bei geringen Schwankungen erreichbar sind. Damit läßt sich die Seilbefestigung sehr gut auf die im jeweiligen Anwendungsfall geforderten Festigkeitswerte dimensionieren, während bei bisherigen Lösungen mit einem höheren Sicherheitsfaktor gearbeitet werden mußte.

Die absolute Höhe des Ausziehwiderstandes wird von der Geometrie der Seilbefestigung, der Höhe der Preßkraft, den Flächen und den Tiefen der Einprägungen sowie der Haltezeit der Preßkraft während des Verpressens beeinflußt, die dem Material Zeit gibt, in die Freiräume zwischen den Drahtlitzen einzufließen.

Bei einer möglichen Ausführungform der Erfindung ist vorgesehen, daß die Einprägung auf wenigstens einer Seite der Hülse über die gesamte Länge der Hülse durchgängig ausgebildet ist.

Mit einer derartigen Einprägung ergibt sich eine besonders großflächige Krafteinleitung, die bei entsprechend hohen Preßkräften und langer Haltezeit ein Maximum an Ausziehwiderstand ermöglicht. Ferner kann es von Vorteil sein, daß auf wenigstens einer Seite der Hülse mehrere Einprägungen in parallel zur Belastungsrichtung liegende Anordnung vorgesehen sind. Dabei hat sich insbesondere die Kombination aus einer durchgängigen Einprägung auf einer Seite der Hülse mit einer Abfolge mehrerer kurzer Einprägung auf der anderen Seite als besonders vorteilhaft erwiesen. Die kürzeren Einprägungen ergeben einen höheren Flächendruck beim Verpressen der Hülse mit den Seilsträngen, wodurch es im Bereich der Einprägungen zu einem besonders guten Fließen des Materials kommt. Die höheren Flächenpressungen erlauben unter Umständen eine Verringerung der Haltezeit, so daß sich der Herstellungsprozeß für die Seilbefestigung verkürzen und damit Herstellungskosten einsparen lassen. Als besonders zweckmäßig haben sich Einprägungen erwiesen, deren Länge ungefähr ihrer Breite entspricht.

Ein weiterer Vorteil der in der Belastungsrichtung über die gesamte Länge der Hülse durchgängig oder unterbrochen angeordneten Einprägungen besteht darin, daß die Steifigkeit der Hülse in der Belastungsrichtung nur unwesentlich beeinflußt wird. Bei den vorbekannten quer angeordneten Einprägungen dagegen kann es insbesondere in Verbindung mit einer versetzten Anordnung infolge dann auftretender Biegemomente in der Hülse unter Belastung zu Verformungen kommen, die die Belastbarkeit der Seilbefestigung einschränken.

Neben der Grundfläche der Einprägungen stellt auch ihre Querschnittsform in der Tiefe einen wesentlichen Faktor zur Beeinflussung des Materialflusses dar. So kann wenigstens ein Teil der Einprägungen einen flachen Grund haben oder wenigstens ein Teil Einprägungen kann einen zur Hülsenmitte hin spitz zulaufenden Querschnitt besitzen. Auch hierbei kann festgestellt werden, daß der flache Grund der Einprägungen für eine gleichmäßige Krafteinleitung des Materials sorgt, während spitze Querschnittsformen den Bearbeitungsvorgang verkürzen helfen. Die spitz zulaufenen Einprägungen haben noch den zusätzlichen Vorteil, daß das entsprechend ausgebildete Preßwerkzeug sich während des Preßvorgangs keilähnlich zwischen die Drahtstränge schiebt und sich daher besonders vorteilhaft auf das Ausfüllen des vor dem Verpressen keilförmigen Freiraums zwischen der Hülse und den Drahtsträngen auswirkt. Zur Verwirklichung spitz zulaufender Querschnitte können die Einprägungen dachförmig, kegelförmig und/oder pyramidenförmig sein.

Ergänzend können auch auf den Schmalseiten der Hülsen Einprägungen vorgesehen sein. Diese können unter Umständen eine weitere Erhöhung des Ausziehwiderstandes bewirken, es sollte jedoch darauf geachtet werden, daß sich bei unterbrochener Anordnung der Einprägungen in Belastungsrichtung die Einprägungen gegenüberliegender Reihen auf gleicher Höhe befinden, da man hierdurch eine bessere Kennwirkung erreicht, als bei einer versetzten Lage der Einprägungen gegenüberliegender Reihen. Dies gilt auch für die Anordnung der Einprägungen zwischen den Drahtsträngen, falls auf beiden Seiten der Hülse eine unterbrochene Anordnung der Einprägungen gewählt wird.

Mit den vorgeschlagenen Einprägungen lassen sich die Eigenschaften sowohl von aus nahtlosen Rohren oder hülsenförmigen Kaltfließpreßteilen hergestellten Blechhülsen als auch von aus flachen Blechteilen durch Umbiegen hergestellten Blechhülsen verbessern. Aus Kostengründen wird dabei die aus einem Blechstreifen gebogene Hülse bevorzugt. Die Naht der auf diese Weise hergestellten Blechhülse kann durchgängig oder punktuell verschweißt sein. Beim Verschweißen ist lediglich darauf zu achten, daß die Drahtlitzen nicht durch überhöhten Wärmeeintrag geschädigt werden, was jedoch beispielsweise bei modernen Laserschweißverfahren problemlos möglich ist. Diese erlauben einen sehr dosierten Wärmeeintrag, so daß das Material der Blechhülse nur um einige wenige Zehntelmillimeter aufgeschmolzen wird. Auch bei den bekannten aus Blechstreifen hergestellten Blechhülsen lassen sich mit einer derartigen Verschweißung Steigerungen der Festigkeitswerte erzielen.

Wie eingangs bereits erwähnt, liegt eine bevorzugte Anwendung der erfindungsgemäßen Seilbefestigung bei Gurtstraffeinrichtungen in Kraftfahrzeugen, wo die Seilbefestigungen als Zugglieder eingesetzt wrden. Hierzu ist an dem zur Seilschlaufe weisenden Ende der Hülse eine Mitnehmerlasche zur Krafteinleitung in die Hülse vorgesehen. Diese kann sich im Belastungsfall beispielsweise an einer Verzahnung abstützen. Neben weiteren denkbaren Einsatzgebieten der erfindungsgemäßen Seilbefestigung sei beispielhaft noch auf die Verwendung in Fangseilen für Steinschlag- oder Lawinenschutzeinrichtungen hingewiesen.

Nachfolgend wird anhand der beigefügten Zeichnungen näher auf Ausführungsbeispiele der Erfindung eingegangen. Es zeigen:
- Fig. 1: eine Draufsicht auf eine Seilbefestigung von der Nahtseite;
- Fig. 2: eine Teilseitenansicht der Seilbefestigung nach Fig. 1;
- Fig. 3: eine Draufsicht der Blechhülse der Seilbefestigung nach Fig. 1 von der Mitnehmerseite;
- Fig. 4: eine nahtseitige Draufsicht einer weiteren Seilbefestigung;
- Fig. 5: eine Seitenansicht der Seilbefestigung nach Fig. 4;
- Fig. 6: eine nahtseitige Ansicht einer Seilbefestigung mit zusätzlicher umlaufender Prägung;
- Fig. 7: eine Seitenansicht der Seilbefestigung nach Fig. 6;
- Fig. 8: eine mitnehmerseitige Ansicht der Seilbefestigung nach Fig. 6;
- Fig. 9: eine nahtseitige Ansicht einer Seilbefestigung mit Kegelprägung;
- Fig. 10: eine Seitenansicht der Seilbefestigung nach Fig. 9;
- Fig. 11: eine mitnehmerseitige Ansicht der Seilbefestigung nach Fig. 9;
- Fig. 12: einen für alle Ausführungsformen identischen Querschnitt der Blechhülse.

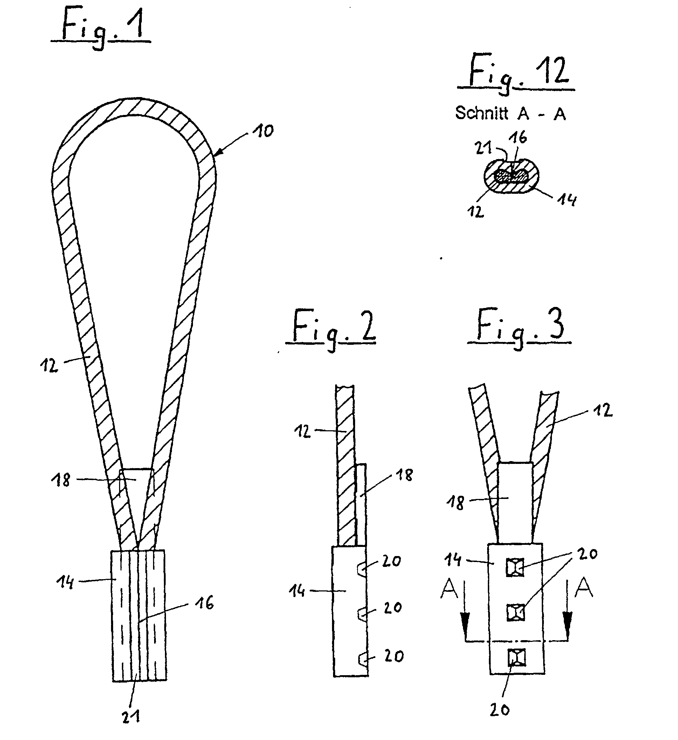

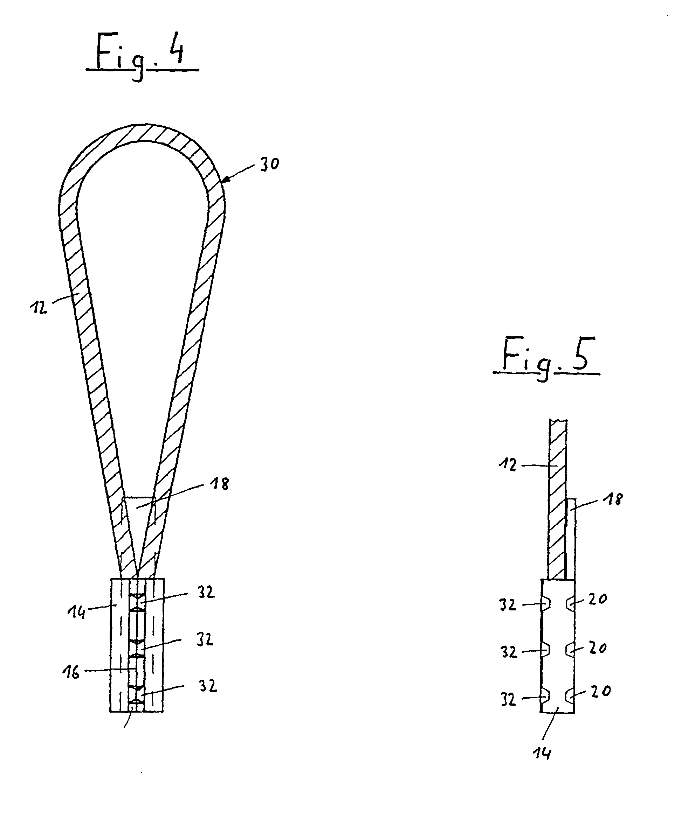

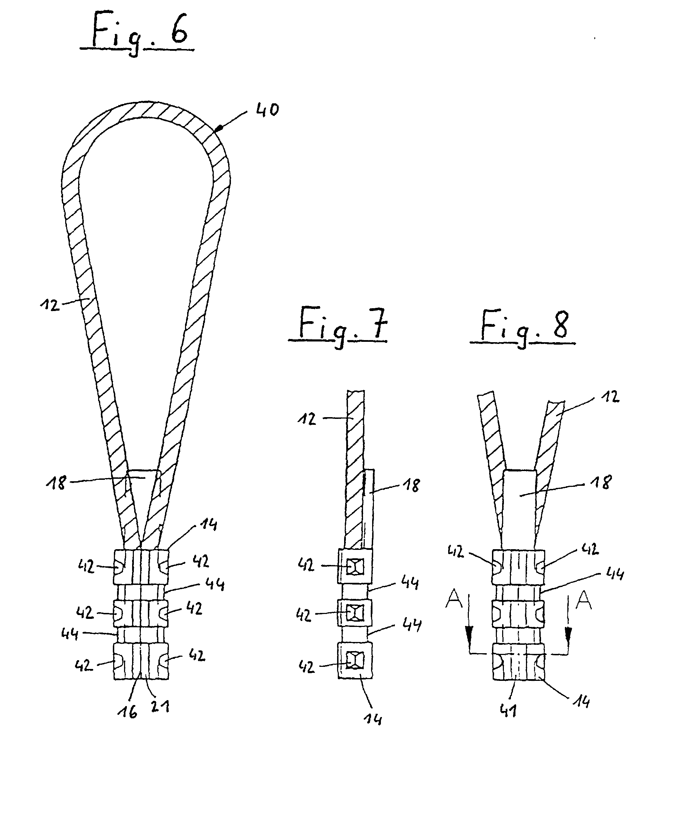

Fig. 1 zeigt eine Seilbefestigung 10, die aus einer Drahtseilschlaufe 12 und einer Blechhülse 14 besteht. Die Blechhülse 14 ist aus einem ursprünglich flachen Blechstreifen um die Enden der Drahtseilschlaufe 12 gebogen und mit diesen verpreßt. Die entstehende Stoßnaht 16 kann mit einer punktuellen oder durchgängigen Verschweißung (z. B. 751 - DIN 24063) versehen sein.

An der Blechhülse 14 ist auf der Seite der Drahtseilschlaufe 12 ein Mitnehmerteil 18 angeformt, das die in die Drahtseilschlaufe 12 eingeleiteten Kräfte an eine Halterung (nicht gezeigt) weiterleitet (siehe hierzu auch Fig. 2 und 3). Aus Fig. 2 und 3 sind auch die drei in einer parallel zur Zugrichtung verlaufenden Reihe angeordneten dachförmigen Einprägungen 20 erkennbar. Diese befinden sich auf der Seite der Blechhülse 14, auf welcher das Mitnehmerteil 18 angeformt ist. Die Einprägungen 20 liegen in der Trennebene der Enden der Drahtseilschlaufe 12. Auf der den Einprägungen 20 gegenüberliegenden Seite der Hülse 14 ist eine Längseinprägung 21 vorgesehen, die sich über die gesamte Länge der Hülse 14 erstreckt. Die Einprägung 21 wird durch einen großflächigen Gegenhalt des Werkzeuges beim Herstellen der Einprägungen 20 erzeugt. Die Preßkraft während es Verpressens ist dabei so hoch gewählt, daß das Blechmaterial der Hülse 14 zwischen den Drahtsträngen über die Fließgrenze hinaus belastet wird und in die Freiräume zwischen den Drahtlitzen fließt. Dadurch entsteht neben dem beim Verpressen von Blechhülsen 14 ohnehin entstehenden Kraftschluß ein Formschluß, der den Ausziehwiderstand des Seils aus der Hülse bei gleichzeitig verringerten Schwankungen erheblich erhöht. Die Tiefe der dachförmigen Einprägungen 20 unterstützt dabei das Ausfüllen der Freiräume, um auf der Innenseite der Blechhülse 14 zwischen den Seilsträngen eine noch bessere formschlüssige Verbindung zwischen der Hülse und der Drahtseilschlaufe 12 herzustellen.

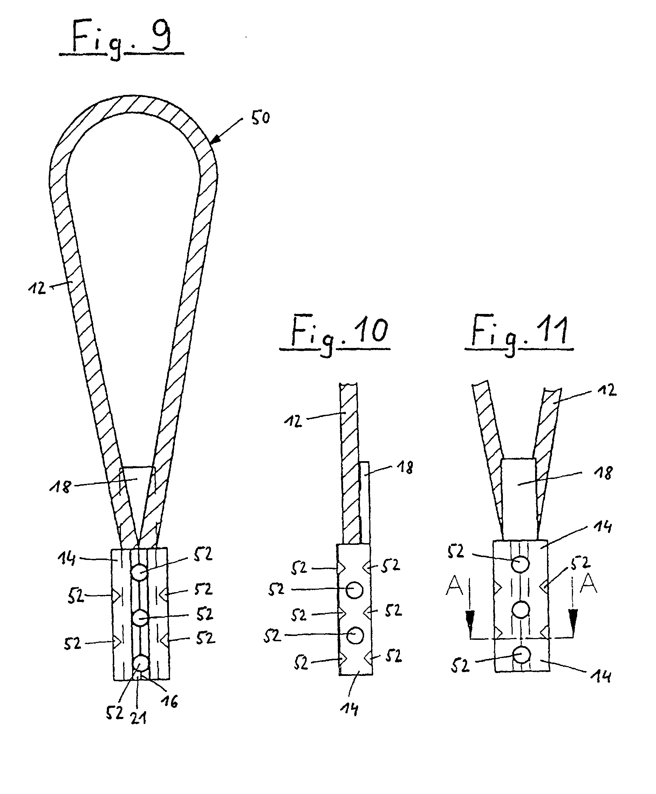

Fig. 4 und 5 zeigen eine weitere Seilbefestigung 30, die im wesentlichen der in Fig. 1 bis 3 gezeigten Seilbefestigung 10 entspricht. Zusätzlich zu den Einprägungen 20 auf der Mitnehmerseite der Blechhülse 14 verfügt die Seilbefestigung 30 jedoch über ebenfalls dachförmige Einprägungen 32 im Bereich der Stoßnaht 16. Die Einprägungen 32 liegen den Einprägungen 20 der Mitnehmerseite auf gleicher Höhe gegenüber unmittelbar in der Längseinprägung 21.

In Fig. 6 bis 8 ist eine weitere Seilbefestigung 40 dargestellt, deren Blechhülse 14 neben der Längseinprägung 21 auf der Nahtseite der Hülse 14 mit einer weiteren Längseinprägung 41 auf der der Nahtseite gegenüberliegenden Seite versehen ist. Die eher punktuellen Einprägungen 20, 32 gemäß den zuvor beschriebenen Ausführungsbeispielen entfallen bei dieser Ausführungsform, wobei sich durch die großflächigen Längseinprägungen 21, 41 in Verbindung mit einer hohen Preßkraft und längeren Haltezeiten ein besonders gutes Ausfüllen der Freiräume zwischen den Seilsträngen durch das fließende Blechmaterial erreichen läßt.

Ergänzend ist die Seilbefestigung 40 an den Schmalseiten der Blechhülse 14 mit dachförmigen Einprägungen 42 versehen. Neben diesen dachförmigen Einprägungen 42 sind Umlaufprägungen 44 vorgesehen, die für eine weitere Verbesserung des Formschlusses zwischen dem Drahtseil und der Hülse 14 sorgen.

In Fig. 9 bis 11 ist eine Seilbefestigung 50 dargestellt, deren Blechhülse allseitig mit Reihen von Einprägungen 52 versehen ist. Im Bereich der Naht 16 der Blechhülse 14 liegen die Einprägungen 52 wiederum im Bereich der Längseinprägung 21. Die Einprägungen 52 unterscheiden sich von den Einprägungen 20, 32, 42 der Seilbefestigung 10, 30, 40 durch ihre Kegelform. Die kegelförmigen Einprägungen 52 gegenüberliegender Seiten der Blechhülse 14 sind auf gleicher Höhe angeordnet, wobei die Einprägungen auf den Schmalseiten in der Höhe zwischen den Einprägungen der Naht- und Mitnehmerseite liegen. Es hat sich als günstig erwiesen, die Einprägungen auf gegenüberliegenden Seiten der Hülse 14 auf gleicher Höhe anzuordnen, da sich hierdurch eine wesentlich bessere formschlüssige Verbindung zwischen Hülse und Drahtseil ergibt, als bei einer versetzten Anordnung.

Selbstverständlich können kegelförmige Einprägungen auch entsprechend Fig. 1 bis 5 angeordnet sein und umgekehrt. Es sind auch weitere Querschnittsformen der Einprägungen denkbar, wie z. B. eine Pyramidenform.

Fig. 12 zeigt einen Querschnitt der Blechhülse 14 längs der Linie A-A der einzelnen Ausführungsformen. Man erkennt, daß die beiden Enden der Drahtseilschlaufe 12 unter dem Verformungsdruck der Blechhülse 14 ihre rein kreisförmige Querschnittsform verloren und sich dem zur Verfügung stehenden Raum angepaßt haben. Durch das bis über die Fließgrenze hinaus belastete Blechmaterial werden die spiralförmigen Freiräume zwischen den Drahtlitzen der Enden der Drahtseilschlaufe 12 formschlüssig ausgefüllt. Insbesondere die auf den Bereich zwischen den beiden Drahtseilenden wirkenden Einprägungen 20, 32, 52 auf der Naht- bzw. Mitnehmerseite der Blechhülse 14 bewirken dabei eine Festigkeitssteigerung der Preßverbindung.

Bei den dargestellten Ausführungsbeispielen, bei welchen die Blechhülse 14 im Endzustand eine Länge von 34 mm, eine Breite von 13 mm und eine Höhe von 9 mm aufweist, hat sich zum Verpressen einer Preßkraft von 120 t als hinreichend erwiesen, um die gewünschten Eigenschaften insbesondere im Hinblick auf das formschlüssige Ausfüllen der Freiräume zwischen den Drahtlitzen durch das Blechmaterial zu erreichen. Je nach Form und Größe der Einprägungen kann eine Haltezeit von bis zu einigen Sekunden ein gleichmäßiges Einfließen des Materials in die Freiräume fördern. Beim Verpressen der Hülse 14 hat sich diese infolge des Materialflusses um 3 mm gelängt.

Die Absolutwerte insbesondere für die Preßkraft hängen selbstverständlich in wesentlichem Maße von den Dimensionen der Blechhülse ab, wobei auch die Größe und Querschnittsform der Einprägungen die Höhe der zum Erzielen des gewünschten Materialflusses notwendigen Preßkraft beeinflußt.

Als Blechmaterial sind übliche Stahlbleche einsetzbar, die einerseits z.B. im Vergleich zu den in der EP 0 478 886 beschriebenen Kaltfließformteilen eine erheblich höhere Materialfestigkeit bei niedrigeren Herstellungskosten besitzen und sich andererseits problemlos in der gewünschten Weise bis zur Fließgrenze belasten lassen.

## Patentansprüche

1. Seilbefestigung mit einer Drahtseilschlaufe (12), deren beide Stränge in paralleler Lage unmittelbar nebeneinander mit einer Blechhülse (14) verpreßt sind, die mit Einprägungen (20, 21, 32, 41, 42, 52) versehen ist, **dadurch gekennzeichnet, daß** auf beiden Seiten der Blechhülse (14) im mittleren Bereich zwischen den Drahtsträngen Einprägungen (20, 21, 32, 41, 52) vorgesehen sind, deren Breiten höchstens gleich dem Abstand der Mittellinien der Drahtstränge sind, und auf der Innenseite der Hülse (14) wenigstens im Bereich zwischen den Drahtsträngen eine formschlüssige Verbindung zwischen den Freiräumen zwischen den Litzen und dem Blechmaterial der Hülse (14) besteht, das infolge eines während des Verpressens mit den Drahtsträngen für eine bestimmte Zeitspanne aufgebrachten hohen Druckes in die Freiräume fließt.

2. Seilbefestigung nach Anspruch 1, **dadurch gekennzeichnet, daß** die Einprägung (21, 41) auf wenigstens einer Seite der Hülse (14) über die gesamte Länge der Hülse (14) durchgängig ausgebildet ist.

3. Seilbefestigung nach Anspruch 1 oder 2, **dadurch gekennzeichnet, daß** auf wenigstens einer Seite der Hülse (14) mehrere Einprägungen (20, 32, 52) in parallel zur Belastungsrichtung liegender Anordnung vorgesehen sind.

4. Seilbefestigung nach Anspruch 3, **dadurch gekennzeichnet, daß** die Länge der Einprägungen (20, 32, 52) ungefähr ihrer Breite entspricht.

5. Seilbefestigung nach einem der vorhergehenden Ansprüche, **dadurch gekennzeichnet, daß** wenigstens ein Teil der Einprägungen (21, 41) einen flachen Grund hat.

6. Seilbefestigung nach einem der vorhergehenden Ansprüche, **dadurch gekennzeichnet, daß** wenigstens ein Teil der Einprägungen einen zur Hülsenmitte hin spitz zulaufenden Querschnitt besitzt.

7. Seilbefestigung nach Anspruch 6, **dadurch gekennzeichnet, daß** wenigstens ein Teil der Einprägungen dachförmig (20, 32), kegelförmig (52) und/oder pyramidenförmig ist.

8. Seilbefestigung nach einem der vorhergehenden Ansprüche, **dadurch gekennzeichnet, daß** auch auf den Schmalseiten der Hülse (14) Einprägungen (42) vorgesehen sind.

9. Seilbefestigung nach einem der vorhergehenden Ansprüche, **dadurch gekennzeichnet, daß** die Hülse (14) aus einem Blechstreifen gebogen ist und die Naht (16) durchgängig oder punktuell verschweißt ist.

10. Seilbefestigung nach einem der vorhergehenden Ansprüche, **dadurch gekennzeichnet, daß** an dem zur Seilschlaufe (12) weisenden Ende der Hülse (14) eine Mitnehmerlasche (18) zur Krafteinleitung in die Hülse (14) vorgesehen ist.

## Claims

1. A cable fastening with a wire cable loop (12), the two strands of which are pressed together immediately adjacent one another in a parallel position by a sheet-metal sleeve (14) which is provided with indentations (20,21,32, 41,42,52), **characterised in that** indentations (20,21,32,41, 52) are provided on both sides of the sheet-metal sleeve (14) in the central region between the wire strands, the widths of which indentations are at a maximum equal to the distance apart of the centre lines of the wire strands, and on the inside of the sleeve (14) at least in the region between the wire strands there is a form-locking connection between the free spaces between the strands and the sheet material of the sleeve (14), which flows into the free spaces as a result of a high pressure applied for a given period of time during the pressing together with the wire strands.

2. A cable fastening according to Claim 1, **characterised in that** the indentation (21,41) is formed continuously on at least one side of the sleeve (14) over the entire length of the sleeve (14).

3. A fastening assembly according to Claim 1 or 2, **characterised in that** a plurality of indentations (20,32,52) are provided on at least one side of the sleeve (14) in a horizontal arrangement parallel to the loading direction.

4. A cable fastening according to Claim 3, **characterised in that** the length of the indentations (20,32, 52) corresponds approximately to their width.

5. A cable fastening according to any one of the preceding Claims, **characterised in that** at least a portion of the indentations (21,41) has a flat bottom.

6. A cable fastening according to any one of the preceding Claims, **characterised in that** at least a portion of the indentations has a cross-section tapering to a point towards the sleeve centre.

7. A cable fastening according to Claim 6, **characterised in that** at least one part of the indentations is roof-shaped (20,32), cone-shaped (52) and/or pyramid-shaped.

8. A cable fastening according to any one of the preceding Claims, **characterised in that** indentations (42) are provided on the narrow sides of the sleeve (14).

9. A cable fastening according to any one of the preceding Claims, **characterised in that** the sleeve (14) is bent from a sheet-metal strip and the seam (16) is continuously welded or spot welded.

10. A cable fastening according to any one of the preceding Claims, **characterised in that** at the end of the sleeve (14) facing towards the cable loop (12) there is provided an entrainment strap (18) for force transmission into the sleeve (14).

## Revendications

1. Fixation de câble présentant une boucle (12) dont les deux cordes sont comprimées directement l'un sur l'autre, en position parallèle, par une douille de tôle (14) portant des empreintes (20, 21, 32, 41, 42, 52),
**caractérisée en ce que**
- il est prévu sur les deux côtés de la douille de tôle (14), dans la zone médiane située entre les brins, des empreintes (20, 21, 32, 41, 52) dont les largeurs sont au plus égales à la distance séparant les lignes médianes des cordes de câble, et
- sur la face interne de la douille (14), au moins dans la zone située entre les brins de câble, il existe une liaison verrouillée par combinaison de formes entre les espaces situés entre les torons et la tôle de la douille (14), le matériau de cette tôle ayant flué dans les espaces libres sous l'effet d'une pression élevée exercée pendant un certain temps lors de la compression l'un sur l'autre des deux cordes de: la boucle.

2. Fixation de câble selon la revendication 1,
**caractérisée en ce que**
l'empreinte (21, 41) est réalisée sur au moins un côté de la douille (14), continue sur toute la longueur de celle-ci.

3. Fixation de câble selon la revendication 1 ou 2,
**caractérisée en ce que**
sur au moins un côté de la douille (14) il est prévu plusieurs empreintes (20, 32, 52), disposées parallèlement à la direction de charge.

4. Fixation de câble selon la revendication 3,
**caractérisée en ce que**
la longueur des empreintes (20, 32, 52) correspond à peu près à leur largeur.

5. Fixation de câble selon l'une des revendications précédentes,
**caractérisée en ce qu'**
au moins une partie des empreintes (21, 41) a un fond plat.

6. Fixation de câble selon l'une des revendications précédentes,
**caractérisée en ce qu'**
au moins une partie des empreintes possède une section dirigée en pointe vers le milieu de la douille.

7. Fixation de câble selon la revendication 6,
**caractérisée en ce qu'**
au moins une partie des empreintes est en forme de toit (20, 32), de cône (52) et/ou de pyramide.

8. Fixation de câble selon l'une des revendications précédentes,
**caractérisée en ce que**
sur les côtés étroits de la douille (14) sont prévues des empreintes (42).

9. Fixation de câble selon l'une des revendications précédentes,
**caractérisée en ce que**
la douille (14) est réalisée par pliage à partir d'une bande de tôle et le cordon (16) de liaison est réalisé par une soudure.

10. Fixation de câble selon l'une des revendications précédentes,
**caractérisée en ce qu'**
à l'extrémité de la douille (14) située vers la boucle (12) il est prévu une patte d'entraînement (18) pour transmettre des forces à la douille (14).
